(19) **Europäisches Patentamt / European Patent Office / Office européen des brevets**

(11) **EP 3 947 076 B1**

(12) **FASCICULE DE BREVET EUROPÉEN**

(45) Date de publication et mention de la délivrance du brevet:
**28.01.2026 Bulletin 2026/05**

(21) Numéro de dépôt: **20713054.3**

(22) Date de dépôt: **27.03.2020**

(51) Classification Internationale des Brevets (IPC):
*B60K 35/28* (2024.01)      *B60W 10/20* (2006.01)
*B60W 30/045* (2012.01)      *B60W 30/12* (2020.01)
*B60W 30/18* (2012.01)      *B60W 40/10* (2012.01)
*B60W 40/105* (2012.01)      *B60W 40/103* (2012.01)
*B60W 50/00* (2006.01)

(52) Classification Coopérative des Brevets (CPC):
**B60W 30/12; B60K 35/28; B60W 10/20;**
**B60W 30/045; B60W 30/18145; B60W 40/10;**
**B60W 40/103; B60W 40/105; B60W 50/0097;**
**B60W 50/0098;** B60K 2360/167; B60K 2360/175;
B60W 2050/0008; B60W 2050/0024;
B60W 2520/10;                    (Cont.)

(86) Numéro de dépôt international:
**PCT/EP2020/058820**

(87) Numéro de publication internationale:
**WO 2020/201141 (08.10.2020 Gazette 2020/41)**

(54) **MODULE ANTICIPATEUR, DISPOSITIF DE CONTRÔLE EN TEMPS RÉEL DE TRAJECTOIRE ET PROCÉDÉ ASSOCIÉS**

ANTIZIPIERUNGSMODUL, ZUGEHÖRIGE VORRICHTUNG UND VERFAHREN ZUR STEUERUNG DES WEGES IN ECHTZEIT

ANTICIPATING MODULE, ASSOCIATED DEVICE AND METHOD FOR CONTROLLING PATH IN REAL TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2019 FR 1903456**

(43) Date de publication de la demande:
**09.02.2022 Bulletin 2022/06**

(73) Titulaires:
• **Ampere SAS**
  **92100 Boulogne-Billancourt (FR)**
• **NISSAN MOTOR Co., Ltd.**
  **Yokohama-shi, Kanagawa 221-0023 (JP)**

(72) Inventeur: **KVIESKA, Pedro**
**78000 Versailles (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 2 991 276      FR-A1- 2 992 931**
**FR-A1- 3 040 349      FR-A1- 3 051 756**

(52) Classification Coopérative des Brevets (CPC):
(Cont.)B60W 2520/12; B60W 2520/14;
B60W 2520/20; B60W 2554/402; B60W 2710/207

**Description**

La présente invention concerne un dispositif de contrôle de trajectoire d'un véhicule.

La présente invention concerne plus particulièrement un dispositif de contrôle en temps réel de trajectoire d'un véhicule pour compenser la courbure d'un virage sur la voie du véhicule, un module anticipateur intégré dans le dispositif et un procédé de mise en œuvre d'un tel dispositif.

Les véhicules automobiles peuvent être équipés de dispositifs de contrôle de trajectoire conçus de telle sorte qu'ils permettent d'assister le conducteur pour maintenir le véhicule dans la voie, notamment pour maintenir le véhicule au centre de la voie. De tels dispositifs peuvent également se trouver sur les véhicules autonomes où la conduite est entièrement déléguée au véhicule. Ils agissent sur la direction du véhicule en modifiant l'angle de braquage des roues directrices du véhicule. La détermination de l'angle de braquage adapté à la situation du véhicule repose sur un algorithme de commande contenu dans le dispositif. Il met en œuvre une loi de commande et utilise un modèle dynamique du véhicule. Une telle loi de commande qui aide au maintien du véhicule au centre de la voie est couramment désignée par l'abréviation anglo-saxonne « LCA » pour « Lane Centering Assist ».

Pour des raisons de confort, la commande doit être douce et ne pas générer d'à-coups qui pourraient gêner/surprendre le conducteur.

La demande FR3 051 756 déposée par la demanderesse constitue l'état de la technique, illustré par les figures 1 à 5. Il est décrit dans cette demande un dispositif DISP de contrôle en temps réel de trajectoire d'un véhicule, visant notamment à préserver le confort des passagers. D'autres document d'art antérieur présentent des dispositifs alternatifs, tels que la demande de brevet FR 3.040.049 Aldans laquelle la position du véhicule est obtenue par mesure d'un écart avec le marquage des voies de circulation, ou la demande de brevet FR 2.991.276 A1.

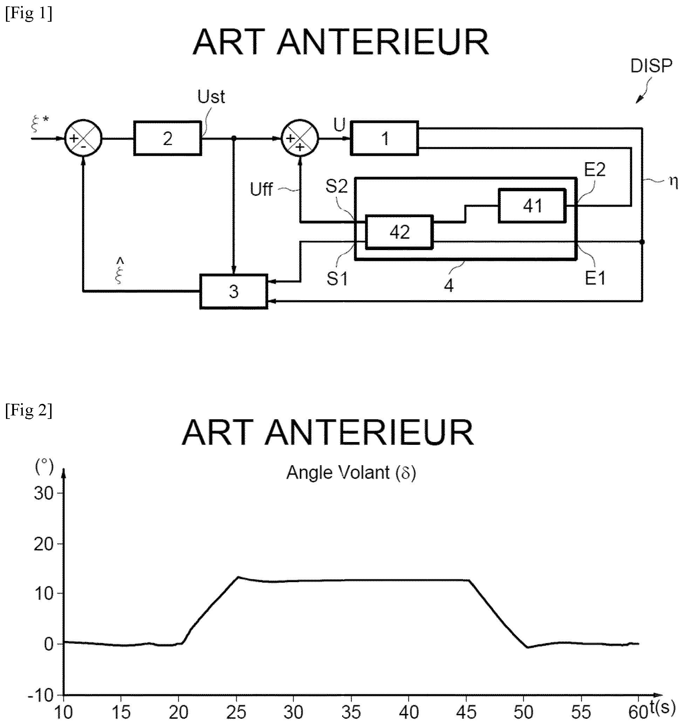

La figure 1 illustre ledit dispositif DISP de contrôle en temps réel de trajectoire appliqué à un véhicule 1 automobile à traction entraîné par un moteur comportant deux roues directrices, de préférence les roues avant du véhicule, contrôlées par un actionneur piloté par un signal de commande u.

Dans ce qui suit l'opérateur x désigne la dérivé de *x*.

Les roues avant directrices du véhicule 1 sont contrôlées par un actionneur piloté par un signal de commande U.

Le véhicule 1 comprend en outre un capteur destiné à mesurer un paramètre du véhicule, tel que la vitesse longitudinale réelle V, l'angle $\delta$ de braquage réalisé des roues avant, la vitesse de lacet $\dot{\Psi}$ du véhicule ou l'angle de direction, par exemple l'angle de direction statique correspondant à l'angle des roues avant à un rapport de démultiplication près. Le véhicule peut en outre être équipé d'un appareil de type RaCam combinant les propriétés d'une caméra optique et d'un radar permettant de fournir au modèle d'une ligne directrice de la voie de circulation du véhicule sous la forme d'un polynôme y(x) ou d'une caméra optique permettant de déterminer le polynôme y(x).

Le véhicule 1 est équipé d'un calculateur embarqué comprenant un dispositif contrôleur 2 pour générer un signal de commande Ust de façon à rendre conforme un vecteur d'état physique $\xi$ du véhicule à un vecteur d'état de consigne $\xi^*$ pour assurer le suivi par le véhicule 1 de l'une trajectoire souhaitée.

Le calculateur embarqué comprend en outre un observateur 3 pour générer en temps réel un vecteur d'état estimé $\hat{\xi}$ de suivi de trajectoire du véhicule 1 se déplaçant à la vitesse V à partir de la commande Ust et d'un vecteur $\eta$ de mesure actuelle de variables d'état corrélé au vecteur d'état physique $\xi$ de suivi de trajectoire du véhicule 1.

Le dispositif observateur 3 a pour but de générer en temps réel un vecteur $\hat{\xi}$ d'état estimé représentant le plus fidèlement possible le vecteur $\xi$ d'état effectif.

Le calculateur embarqué comporte en outre un module anticipateur 4 additionnant une deuxième commande Uff de braquage en fonction d'une courbure $\gamma$ff d'un virage à la première commande Ust de braquage produite par le dispositif 2 pour compenser le virage.

La deuxième commande de braquage Uff permet au véhicule 1 de franchir le virage de courbure Yff. La deuxième commande est ajoutée au signal de commande Ust de sorte que le dispositif contrôleur 2 régule la trajectoire du véhicule 1 pour que le véhicule 1 suive une route droite.

Par conséquent, le signal de commande U est égal à la somme de la première commande Ust et de la deuxième commande Ust.

Le dispositif de contrôle en temps réel de trajectoire du véhicule 1 comprend l'actionneur, le capteur de vitesse, le capteur pour mesurer un angle $\delta$ de braquage, le capteur pour mesure la vitesse de lacet $\dot{\Psi}$ et l'appareil de type RaCam, le dispositif 2, l'observateur 3 et le module 4.

Le vecteur d'état physique $\xi$ du véhicule est égal à :

$$\xi = \begin{pmatrix} \dot{\Psi} \\ \Psi \\ \dot{y}l \\ yl \\ \dot{\delta} \\ \delta \\ \int -yl \end{pmatrix} \quad (1)$$

où $\Psi$ est l'angle relatif de cap entre l'axe du véhicule et la tangente à la trajectoire de référence, $\dot{y}l$ est la vitesse latéral d'éloignement du véhicule par rapport à la trajectoire idéale du véhicule, $yl$ est l'écart latéral entre le centre de gravité du véhicule et le centre de la voie du véhicule et la tangente à la trajectoire en avant du véhicule, $\dot{\delta}$ est la variation de l'angle de braquage et $\int -yl$ représente l'intégrale de la position latérale.

Le vecteur d'état de consigne $\xi^*$ est égal à :

$$\xi^* = \begin{pmatrix} \dot{\Psi}_{ref} \\ \Psi_{ref} \\ \dot{y}l_{ref} \\ yl_{ref} \\ \dot{\delta}_{ref} \\ \delta_{ref} \\ \int -yl_{ref} \end{pmatrix} \quad (2)$$

Et le vecteur d'état estimé $\hat{\xi}$ est égal à :

$$\hat{\xi} = \begin{pmatrix} \dot{\Psi}_{est} \\ \Psi_{est} \\ \dot{y}l_{est} \\ yl_{est} \\ \dot{\delta}_{est} \\ \delta_{est} \\ \int -yl_{est} \end{pmatrix} \quad (3)$$

Le vecteur $\xi$ est inconnu car l'état interne du véhicule 1 n'est pas accessible dans sa totalité.

Le dispositif 3 met en œuvre un modèle de véhicule connu sous le nom de modèle bicyclette et se présente sous la forme matricielle suivante :

$$\dot{\hat{\xi}} = A \cdot \hat{\xi} + B_\delta \cdot \delta_{req} + B_\rho \cdot \gamma\text{ff} \quad (4)$$

où $\delta_{req}$ est la somme du signal de commande Ust et de la deuxième commande de braquage Uff, et $\gamma$ff est le rayon de courbure du virage.

La valeur de l'angle $\delta_{ref}$ est égale à la commande Uff.

L'angle de braquage $\delta$ et l'angle de braquage $\delta_{ref}$ de référence sont reliés par une fonction de transfert du deuxième ordre modélisant la direction assistée.

La matrice A comprend des coefficients variables et constants au cours d'une même séquence de roulage dépendants, et dépendent des paramètres du véhicule 1 suivants :

- la rigidité de dérive des roues avant $C_f$ ;
- la rigidité de dérive des roues arrière $C_r$ ;

- la distance de centre de gravité à l'essieu avant $l_f$ ;
- la distance de centre de gravité à l'essieu arrière $l_r$ ;
- la masse totale du véhicule m ;
- la vitesse du véhicule V;
- l'inertie du véhicule autour d'un axe vertical passant par son centre de gravité J;
- un coefficient amortissement de la fonction du deuxième ordre $\zeta$; et
- une pulsation propre de la fonction de transfert du deuxième ordre $\omega$.

La matrice $B_\delta$ dépend de la pulsation propre $\omega$ et de la vitesse V, et la matrice $B_\rho$ dépend de la vitesse V.

La valeur des paramètres du véhicule 1 est définie lorsque le véhicule 1 n'est pas chargé et la pression des pneus est à leur valeur optimale, les paramètres étant fixes pendant toute la durée de vie du véhicule 1.

Le dispositif 3 reçoit sur une première entrée un vecteur $\eta$ de mesures actuelles corrélé au vecteur $\xi$ d'état physique par une relation instrumentale C suivante :

$$\eta = \begin{bmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{bmatrix} \cdot \xi \qquad (5)$$

Le vecteur $\eta$ de mesures actuelles comporte cinq composantes :

$$\eta = \begin{pmatrix} \dot{\psi} \\ \psi \\ yl \\ \delta \\ \int -yl \end{pmatrix} \qquad (6)$$

La vitesse de lacet $\psi$ est mesurée par le capteur de vitesse de lacet.

L'appareil de type RaCam détermine le polynôme y(x).

L'observateur 3 reçoit sur une deuxième entrée la commande Ust égale à l'angle de braquage $\delta$.

Une troisième entrée de l'observateur 3 est reliée à une première sortie S1 du module anticipateur 4.

Le module anticipateur 4 comprend en outre une deuxième sortie S2 reliée à un additionneur de sorte que le signal de commande U soit la somme du signal de commande Ust et du signal de commande Uff, et une première entrée E1 reliée au véhicule 1 de manière à recevoir le vecteur $\eta$ de mesures actuelles, et une deuxième entrée E2 reliée au véhicule 1 de manière à recevoir le polynôme y(x).

L'angle $\psi$ relatif de cap, l'écart latéral yl sont déterminés à partir du polynôme y(x) et l'intégrale de la position latérale $\int -yl$ est calculée

Le module anticipateur 4 comprend un premier sous-module 41 relié à la deuxième entrée E2, et un deuxième sous-module 42 relié au premier sous-module 41, à l'entrée E1 et aux sorties S1 et S2.

Le premier sous-module 41 reçoit le polynôme y(x) donnant la géométrie de la ligne directrice de la voie de circulation pour chaque point à la distance x à l'avant du véhicule 1 et détermine la courbure $\gamma$ff transmise au deuxième sous-module 42.

Le deuxième sous-module 42 reçoit en outre le vecteur $\eta$ de mesures actuelles.

Lors du virage de courbure Yff, le module 4 corrige l'angle $\psi$ relatif de cap, la vitesse de lacet $\dot{\psi}$ et l'angle de roue $\delta$.

La boucle fermée comprenant le véhicule 1, les dispositifs 2 et 3, minimise le vecteur d'état $\xi$ autour du vecteur nul correspondant à une ligne droite, le vecteur consigne $\xi^*$ étant égal au vecteur nul.

Les dynamiques de la boucle fermée sont lentes pour assurer un bon niveau de confort.

Le module anticipateur 4 fonctionne en boucle ouverte pour assurer une bonne prestation lors des prises de virage.

Le deuxième sous-module 42 calcule un angle de roue $\delta_{eq}$ correspondant à la courbure $\gamma$ff et un vecteur de mesures $\eta_{eq}$ pseudo-calculé associé.

L'angle de roue $\delta_{eq}$ est donnée par la relation suivante :

$$\delta \text{eq} = \frac{-(c_f l_{f-} c_r l_r) \cdot m \cdot V^2 - (c_f l_{f-} c_r l_r)^2 + (c_f + c_r)(c_f l_f{}^2 + c_r l_r{}^2)}{c_f c_r (l_f + l_r)} \mathbf{Y}\text{ff} \qquad (7)$$

et le vecteur de mesures $\eta_{eq}$ pseudo-calculé est égal à :

$$\eta_{eq} = \begin{pmatrix} \dot{\Psi}_{eq} \\ \Psi_{eq} \\ yl_{eq} \\ \delta_{eq} \\ \int -yl_{eq} \end{pmatrix} = \begin{pmatrix} V \cdot \mathbf{Y}\text{ff} \\ \Psi_{eq} \\ 0 \\ \delta_{eq} \\ 0 \end{pmatrix} \qquad (8)$$

où

$$\Psi_{eq} = \frac{l_f \cdot m \cdot V^2 + l_f (c_f l_{f-} c_r l_r) - (c_f l_f{}^2 + c_r l_r{}^2)}{c_r (l_f + l_r)} \mathbf{Y}\text{ff} \qquad (9)$$

L'angle $\delta_{eq}$ est transmis par la deuxième sortie S2 du module 4 et le vecteur de mesures $\eta_{eq}$ est transmis par la première entrée S1 de sorte que le vecteur de mesure $\eta_{eq}$ pseudo-calculé soit retranché du vecteur de mesure $\eta$ de sorte que le module observateur 3 porte uniquement sur les écarts de trajectoire sur une voie virtuelle droite.

Cependant, le module anticipateur 4 est basé sur le modèle bicyclette et n'évolue pas pendant la durée de vie du véhicule 1.

Lorsque les paramètres physiques du véhicule 1 évoluent, par exemple lors d'un chargement de masse dans le coffre, ou lorsque les pneus sont dégonflés ou abîmés, les paramètres du module anticipateur 4 ne sont plus corrects et de ce fait il y a une perte de prestation se traduisant par des prises de virage avec des valeurs importantes d'écart latéral par rapport au centre de la voie.

Les figures 2 et 3 représentent l'évolution de l'angle de braquage $\delta$ et l'écart latéral yl selon le temps suite à l'action du dispositif de contrôle en temps réel de trajectoire lorsque les paramètres du véhicule 1 sont à leur valeur nominale et le coffre est vide.

On constate un écart de 18 cm en entrée et en sortie de virage.

Les figures 4 et 5 représentent l'évolution de l'angle de braquage $\delta$ et l'écart latéral yl selon le temps suite à l'action du dispositif de contrôle en temps réel de trajectoire lorsque le véhicule 1 comprend dans son coffre une masse supplémentaire de 300 kg.

On constate un écart de 75 cm en entrée et en sortie de virage.

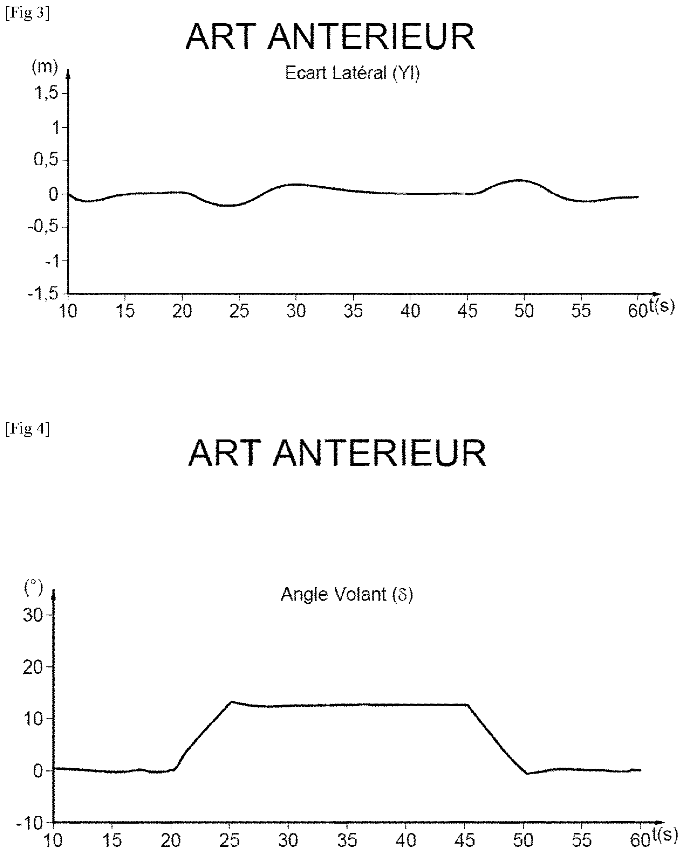

Le véhicule 1 devient plus survireur par rapport à sa configuration nominale représentée aux figures 2 et 3.

L'invention a donc pour but de rendre robuste en prise de virage le dispositif de contrôle en temps réel de trajectoire, en adaptant la commande du module anticipateur en fonction des variations des paramètres physiques du véhicule.

Au vu de ce qui précède, l'invention propose un module anticipateur pour dispositif de contrôle en temps réel de la trajectoire d'un véhicule automobile, ledit module comprenant un sous-module de calcul d'une commande de braquage pour compenser la courbure d'un virage sur la voie du véhicule, un dispositif à gain variable étant relié à une sortie du sous-module de calcul.

Le dispositif à gain variable est relié à un contrôleur apte à réguler la valeur du gain de manière à diminuer l'écart latéral entre le centre de gravité du véhicule et le centre de la voie du véhicule selon le résultat de la comparaison de composantes d'un vecteur de mesures actuelles de variables d'état du dispositif entre elles et à un seuil de détection, la sortie du gain variable étant la commande de braquage pour compenser la courbure du virage.

Selon une caractéristique, le module comprend en outre un deuxième sous-module de calcul relié à une sortie du dispositif à gain variable et étant apte à calculer un vecteur de mesures pseudo-calculé à partir d'un modèle du véhicule.

De préférence, le modèle du véhicule comprend un modèle de type bicyclette.

L'invention a également pour objet un dispositif de contrôle en temps réel de trajectoire d'un véhicule pour compenser la courbure d'un virage sur la voie d'un véhicule comprenant un module anticipateur tel que défini précédemment, et un observateur générant en temps réel un vecteur d'état estimé de suivi de voie rectiligne du véhicule de façon à produire une commande de braquage pour stabiliser la trajectoire du véhicule par rapport à la voie rectiligne, l'observateur étant relié au module anticipateur.

L'invention a également pour objet un procédé de contrôle en temps réel de trajectoire d'un véhicule automobile pour compenser la courbure d'un virage sur la voie du véhicule.

On modifie le gain d'un dispositif à gain variable d'un module anticipateur lorsque l'on détecte que le véhicule est survireur par rapport à sa configuration nominale de manière à diminuer l'écart latéral entre le centre de gravité du véhicule et le centre de la voie du véhicule.

On détermine que le véhicule est survireur par rapport à sa configuration nominale lorsque l'écart latéral et la direction du virage sont orientés dans le même sens dans un référentiel du véhicule, et l'écart latéral est supérieur à un seuil de détection.

Avantageusement, on initialise le gain du dispositif à gain variable lorsque l'écart latéral et la direction du virage sont orientés dans des sens différents dans le référentiel du véhicule et l'écart latéral est inférieur au seuil de détection.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1], dont il a déjà été fait mention, illustre schématiquement un dispositif de contrôle en temps réel de trajectoire d'un véhicule selon l'état de la technique ;

[Fig 2]

[Fig 3] dont il a déjà été fait mention, représentent l'évolution de l'angle de braquage et l'écart latéral selon le temps suite à l'action du dispositif de contrôle selon l'état de la technique lorsque les paramètres du véhicule sont à leur valeur nominale et le coffre est vide;

[Fig 4]

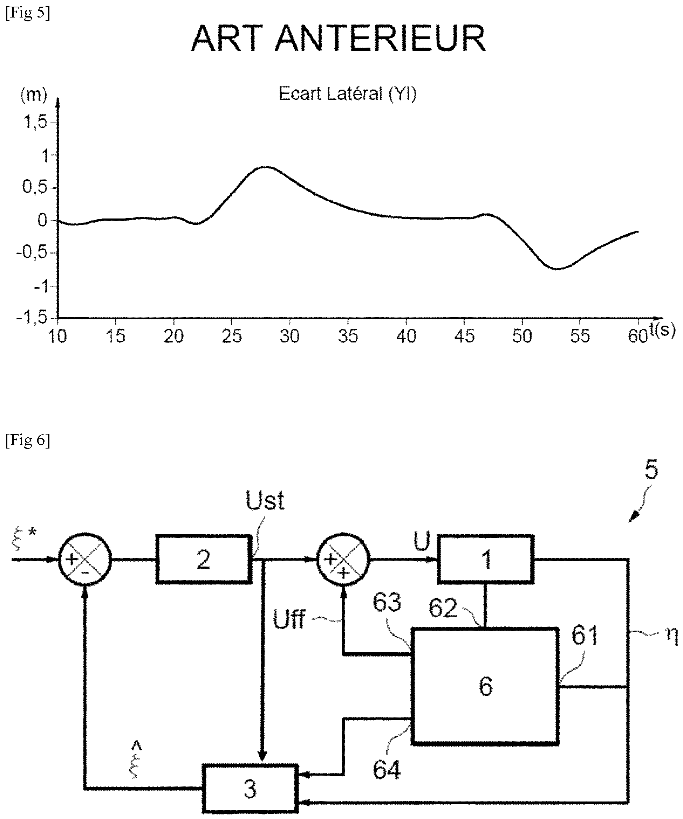

[Fig 5] représentent l'évolution de l'angle de braquage et l'écart latéral selon le temps suite à l'action du dispositif de contrôle selon l'état de la technique lorsque le véhicule comprend dans son coffre une masse supplémentaire ;

[Fig 6] illustre schématiquement un mode de réalisation d'un dispositif de contrôle en temps réel de trajectoire d'un véhicule selon l'invention ;

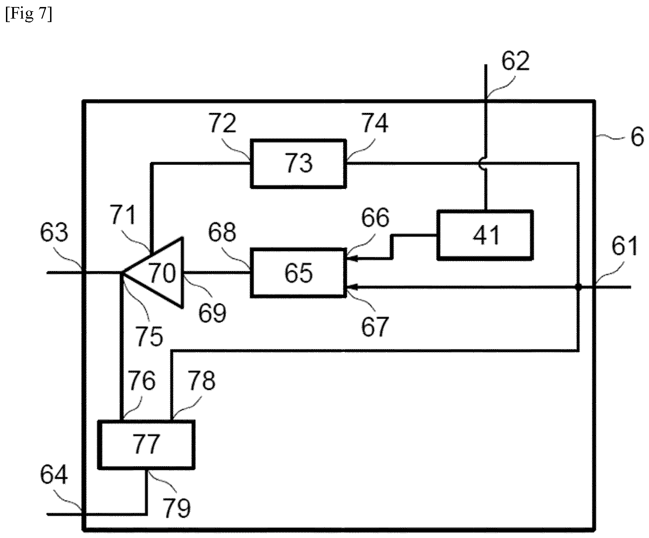

[Fig 7] illustre un mode de réalisation du module anticipateur selon l'invention ;

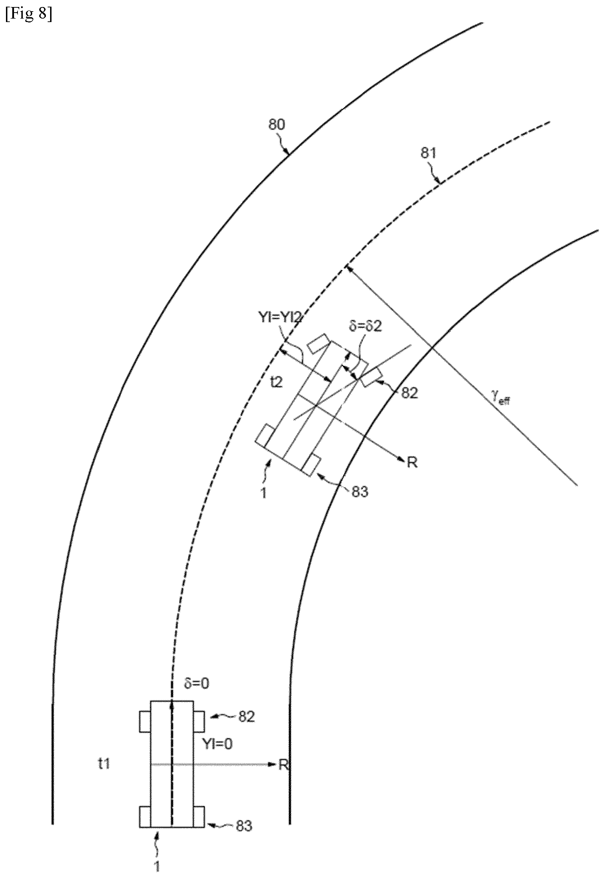

[Fig 8] illustre schématiquement un véhicule évoluant sur une voie comportant un virage ;

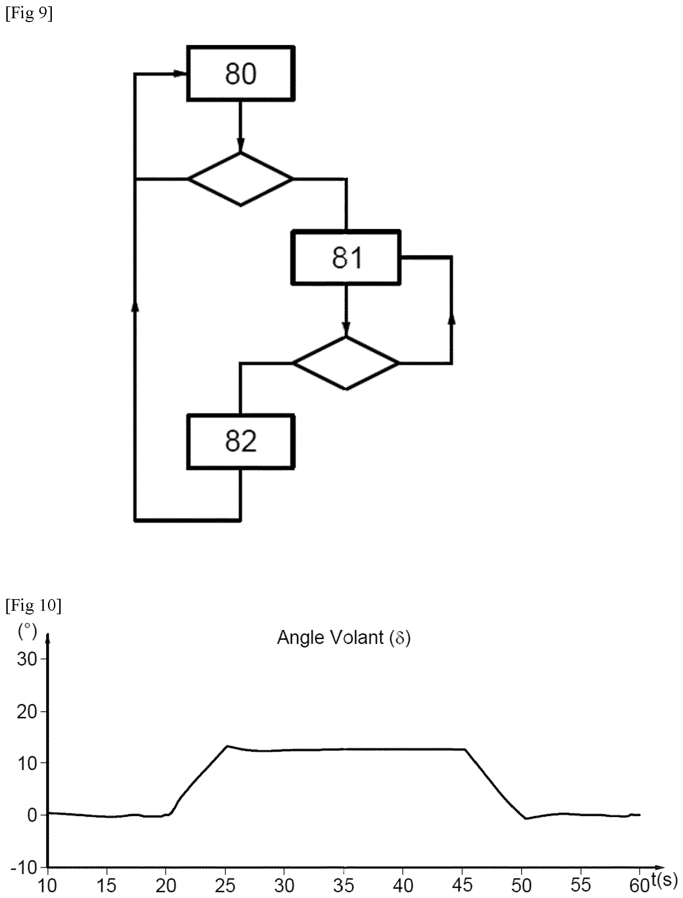

[Fig 9] illustre un mode de mise en œuvre du dispositif de contrôle en temps réel de trajectoire d'un véhicule selon l'invention ; et

[Fig 10]

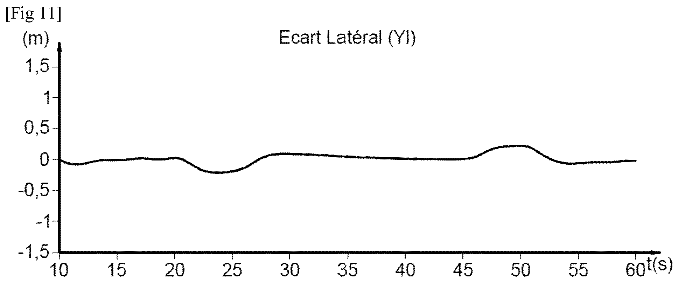

[Fig 11] représentent l'évolution de l'angle de braquage et l'écart latéral selon le temps suite à l'action du dispositif de contrôle selon l'invention lorsque le véhicule comprend dans son coffre une masse supplémentaire.

On a schématiquement représenté sur la figure 6 un mode de réalisation d'un dispositif 5 de contrôle en temps réel de trajectoire du véhicule 1 pour compenser la courbure d'un virage sur la voie du véhicule 1 selon un aspect de l'invention. Les éléments du dispositif 5 identiques aux éléments constituant le dispositif DISP de la figure 1 portent les mêmes références.

On retrouve le véhicule 1, le dispositif contrôleur 2 pour générer un signal de commande Ust et l'observateur 3 pour générer en temps réel le vecteur d'état estimé $\xi$ de suivi de voie rectiligne du véhicule à partir du vecteur $\eta$ de mesures actuelles et du vecteur de mesure $\eta_{eq}$ pseudo-calculé.

Le dispositif 5 comprend en outre un module anticipateur 6 comprenant une première entrée 61 reliée au véhicule 1 et recevant le vecteur $\eta$ de mesures actuelles, une deuxième entrée 62 reliée au véhicule 1 et recevant le polynôme y(x), une première sortie 63 reliée à l'additionneur de sorte que le signal de commande U soit la somme du signal de commande Ust et d'un signal du commande Ueff généré par le module 6 et une deuxième sortie 64 reliée à la troisième entrée de l'observateur 3.

Le module anticipateur 6 fonctionne en boucle ouverte.

La figure 7 illustre un mode de réalisation du module anticipateur 6.

Le module anticipateur 6 comprend le premier sous-module 41 de détermination de la courbure $\gamma$ff à partir du polynôme y(x) donnant la géométrie de la ligne directrice de la voie de circulation pour chaque point à la distance x à l'avant du véhicule 1 déterminé par l'appareil de type RaCam et relié à l'entrée 62 du module 6, un sous-module de calcul d'une commande de braquage 65 comprenant une première entrée 66 reliée à la sortie du sous-module 41, une deuxième entrée 67 reliée à l'entrée 61 du module 6 et une sortie 68 reliée à une entrée 69 d'un dispositif à gain variable 70.

Le dispositif à gain variable 70 comprend une entrée de pilotage 71 reliée à une sortie 72 d'un contrôleur 73.

Le contrôleur 73 comprend en outre une entrée 74 reliée à l'entrée 61 du module 6.

Le dispositif à gain variable 70 comprend une sortie 75 reliée d'une part à la première sortie 63 du module 6 et, d'autre part, à une première entrée 76 d'un deuxième sous-module de calcul 77.

Le deuxième sous-module de calcul 77 comprend en outre une deuxième entrée 78 reliée à la première entrée 61 du module 6 et une sortie 79 reliée à la deuxième sortie 64 du module 6.

Le sous-module de calcul d'une commande de braquage 65 calcule une commande de braquage pour compenser la courbure Yff.

La commande de braquage est égale à l'angle de roue $\delta_{eq}$ donnée par l'équation (7) et mise en œuvre par le sous-module de calcul d'une commande de braquage 65.

Le contrôleur 73 pilote le gain dispositif à gain variable 70 de manière à diminuer l'écart latéral yl entre le centre de gravité du véhicule 1 et le centre de la voie du véhicule selon le résultat de la comparaison de composantes du vecteur $\eta$ de mesures actuelles de variables d'état du dispositif entre elles et à un seuil de détection S.

Le deuxième sous-module 77 détermine le vecteur de mesures $\eta_{eq}$ pseudo-calculé selon l'équation (8).

En variante, le premier sous-module 41 de détermination de la courbure peut être déporté à l'extérieur du module anticipateur 6.

La figure 8 illustre le véhicule 1 évoluant sur une voie 80 comportant le virage de courbure Yff.

Le véhicule 1 comprend un repère R dont l'origine est par exemple confondue avec le centre de gravité nominal du véhicule 1.

La trajectoire du véhicule 1 suit une ligne directrice centrale 81 de la voie 80.

A l'instant t1, le véhicule 1 est sur une portion rectiligne de la voie 80. Les roues avant 82 et arrière 83 du véhicule 1 sont alignées, l'écart latéral yl et l'angle de roue $\delta$ sont sensiblement nuls.

A l'instant t2, le véhicule 1 est dans le virage.

Le dispositif 5 relève un écart latéral yl2 non nul entre le centre de gravité nominal du véhicule 1 et la ligne directrice centrale 81 de la voie 80, et détermine une commande de braquage Ust pour compenser l'écart entre le vecteur d'état de consigne $\xi^*$ et le vecteur d'état estimé $\hat{\xi}$, de sorte que l'écart s'annule ou tende vers 0.

Le signe de l'angle de roues $\delta_2$ permet de déterminer le sens d'orientation du virage.

La figure 9 illustre un mode de mise en œuvre du dispositif 5.

Durant l'étape 80, le contrôleur 73 détermine si le véhicule 1 est survireur dans le virage.

Le véhicule 1 est survireur dans le virage par rapport au nominal si l'écart latéral yl et la direction du virage sont orientés dans le même sens dans le référentiel R du véhicule 1, et si la valeur de l'écart latéral yl est supérieure à un seuil S de détection.

Dans le repère R du véhicule 1 représenté à la figure 8, l'angle orienté $\delta_2$ et l'écart latéral yl2 sont de valeur positive.

Par conséquent l'écart latéral yl2 et la direction du virage sont orientés dans le même sens.

On suppose que par la suite l'écart latéral yl2 est supérieur au seuil S de détection.

On poursuit à l'étape 81.

Si au moins l'une des deux conditions n'est pas remplie, on reste à l'étape 80.

Durant l'étape 81, le contrôleur 73 pilote le gain du dispositif à gain variable 70 de sorte que sa valeur soit égale à une valeur prédéterminée.

Le gain du dispositif à gain variable 70 passe durant cette étape de 1 à la valeur prédéterminée, par exemple 0.75.

La valeur prédéterminée est définie par exemple en testant le comportement du véhicule 1 de manière empirique ou par simulation numérique pour différentes valeurs prédéterminées.

La modification du gain permet de diminuer la valeur yl de l'écart latéral entre le centre de gravité du véhicule 1 et le centre de la voie du véhicule comme représenté aux figures 10 et 11 représentant l'évolution de l'angle de braquage $\delta$ et l'écart latéral yl selon le temps suite à l'action du dispositif 5, le véhicule 1 comprend dans son coffre une masse supplémentaire de 300 kg.

L'écart latéral yl est réduit à 20cm.

En outre, durant l'étape 81, le contrôleur 73 détermine si le véhicule 1 est toujours survireur dans le virage par rapport au nominal.

Si l'écart latéral yl et la direction du virage sont orientés dans des sens différents dans le référentiel R du véhicule 1, et l'écart latéral yl est inférieur à au seuil S de détection, dans une étape 82, le contrôleur 73 réinitialise le gain du dispositif à gain variable 70.

**Revendications**

**1.** Module anticipateur (6) pour dispositif de contrôle en temps réel de la trajectoire d'un véhicule automobile, ledit module comprenant un sous-module (65) de calcul d'une commande de braquage pour compenser la courbure d'un virage sur la voie du véhicule, un dispositif à gain variable (70) étant relié à une sortie du sous-module de calcul, **caractérisé en ce que** le dispositif à gain variable est relié à un contrôleur (73) apte à réguler la valeur du gain du dispositif à gain variable lorsque le véhicule est survireur dans un virage par rapport à une configuration nominale de manière à diminuer l'écart latéral (yl) entre le centre de gravité du véhicule et le centre de la voie (81) du véhicule selon le résultat de la comparaison de composantes d'un vecteur ($\eta$) de mesures actuelles de variables d'état du dispositif entre elles et à un seuil (S) de détection, la sortie du gain variable étant la commande de braquage pour compenser la courbure (Vff) du virage et le véhicule étant déterminé comme survireur lorsque l'écart latéral (yl) et la direction du virage sont orientés dans le même sens dans un référentiel (R) du véhicule, et que l'écart latéral est supérieur à un seuil (S) de détection.

2. Module selon l'une des revendications 1, comprenant en outre un deuxième sous-module(77) de calcul relié à une sortie du dispositif à gain variable (70) et étant apte à calculer un vecteur ($\eta_{eq}$) de mesures pseudo-calculé à partir d'un modèle du véhicule.

3. Module selon la revendication 2, dans lequel le modèle du véhicule comprend un modèle de type bicyclette.

4. Dispositif (5) de contrôle en temps réel de trajectoire d'un véhicule pour compenser la courbure ($\gamma$ff) d'un virage sur une voie (80) d'un véhicule (1) comprenant un module anticipateur (6) selon l'une des revendications précédentes, et un observateur (3) générant en temps réel un vecteur ($\hat{\xi}$) d'état estimé de suivi de voie rectiligne du véhicule de façon à produire une commande de braquage (Ust) pour stabiliser la trajectoire du véhicule par rapport à la voie rectiligne, l'observateur étant relié au module anticipateur.

5. Procédé de contrôle en temps réel de trajectoire d'un véhicule automobile pour compenser la courbure ($\gamma$ff) d'un virage sur la voie (80) du véhicule (1), **caractérisé en ce que** l'on régule le gain d'un dispositif à gain variable (73) d'un module anticipateur (6) lorsque l'on détermine que le véhicule est survireur dans un virage par rapport à une configuration nominale de manière à diminuer l'écart latéral (yl) entre le centre de gravité du véhicule et le centre (81) de la voie du véhicule, le véhicule étant déterminé comme survireur lorsque l'écart latéral (yl) et la direction du virage sont orientés dans le même sens dans un référentiel (R) du véhicule, et que l'écart latéral est supérieur à un seuil (S) de détection.

6. Procédé selon la revendication 5, dans lequel on initialise le gain d'un dispositif à du gain variable (73) lorsque l'écart latéral (yl) et la direction du virage sont orientés dans des sens différents dans le référentiel (R) du véhicule et l'écart latéral est inférieur au seuil (S) de détection.

**Patentansprüche**

1. Antizipierungsmodul (6) für eine Vorrichtung zur Echtzeitkontrolle der Trajektorie eines Kraftfahrzeugs, wobei das Modul ein Berechnungsuntermodul (65) zum Berechnen eines Lenkbefehls zum Ausgleichen der Krümmung einer Kurve auf der Fahrspur des Fahrzeugs umfasst, wobei eine Vorrichtung mit variabler Verstärkung (70) mit einem Ausgang des Berechnungsuntermoduls verbunden ist, **dadurch gekennzeichnet, dass** die Vorrichtung mit variabler Verstärkung mit einem Controller (73) verbunden ist, der in der Lage ist, den Wert der Verstärkung der Vorrichtung mit variabler Verstärkung zu regeln, wenn das Fahrzeug in einer Kurve in Bezug auf eine Nennkonfiguration übersteuert, so dass die seitliche Abweichung (yl) zwischen dem Schwerpunkt des Fahrzeugs und dem Zentrum der Fahrspur (81) des Fahrzeugs entsprechend dem Ergebnis des Vergleichs von Komponenten eines Vektors ($\eta$) von aktuellen Messungen von Zustandsvariablen der Vorrichtung untereinander und mit einem Detektionsschwellenwert (S) verringert wird, wobei der Ausgang der variablen Verstärkung der Lenkbefehl zum Ausgleichen der Krümmung (Vff) der Kurve ist und wobei das Fahrzeug als übersteuernd bestimmt wird, wenn die seitliche Abweichung (yl) und die Richtung der Kurve in demselben Richtungssinn in einem Koordinatensystem (R) des Fahrzeugs ausgerichtet sind und die seitliche Abweichung größer als ein Detektionsschwellenwert (S) ist.

2. Modul nach einem der Ansprüche 1, umfassend ferner ein zweites Berechnungssubmodul (77), das mit einem Ausgang der Vorrichtung mit variabler Verstärkung (70) verbunden ist und in der Lage ist, einen ausgehend von einem Modell des Fahrzeugs pseudoberechneten Vektor ($\eta_{eq}$) von Messungen zu berechnen.

3. Modul nach Anspruch 2, wobei das Modell des Fahrzeugs ein Modell vom Typ Fahrrad umfasst.

4. Vorrichtung (5) zur Echtzeitkontrolle der Trajektorie eines Fahrzeugs zum Ausgleichen der Krümmung (Vff) einer Kurve auf der Fahrspur (80) eines Fahrzeugs (1), umfassend ein Antizipierungsmodul (6) nach einem der vorhergehenden Ansprüche und einen Beobachter (3), der in Echtzeit einen geschätzten Zustandsvektor ($\hat{\xi}$) zur Überwachung einer geradlinigen Fahrspur des Fahrzeugs generiert, so dass ein Lenkbefehl (Ust) erzeugt wird, um die Trajektorie des Fahrzeugs in Bezug auf die geradlinige Fahrspur zu stabilisieren, wobei der Beobachter mit dem Antizipierungsmodul verbunden ist.

5. Verfahren zur Echtzeitkontrolle der Trajektorie eines Kraftfahrzeugs zum Ausgleichen der Krümmung (Vff) einer Kurve auf der Fahrspur (80) des Fahrzeugs (1), **dadurch gekennzeichnet, dass** man die Verstärkung einer Vorrichtung mit variabler Verstärkung (73) eines Antizipierungsmoduls (6) geregelt wird, wenn bestimmt wird, dass das Fahrzeug in einer Kurve in Bezug auf eine Nennkonfiguration übersteuert, so dass die seitliche Abweichung (yl) zwischen dem Schwerpunkt des Fahrzeugs und dem Zentrum (81) der Fahrspur des Fahrzeugs verringert wird, wobei das Fahrzeug als übersteuernd bestimmt wird, wenn die seitliche Abweichung (yl) und die Richtung der Kurve in demselben Richtungssinn in einem Koordinatensystem (R) des Fahrzeugs ausgerichtet sind und die seitliche Abweichung größer als ein Detektionsschwellenwert (S) ist.

6. Verfahren nach Anspruch 5, wobei die Verstärkung einer Vorrichtung mit variabler Verstärkung (73) initialisiert wird, wenn die laterale Abweichung (yl) und die Richtung der Kurve in unterschiedliche Richtungssinne in dem Koordinatensystem (R) des Fahrzeugs ausgerichtet sind und die seitliche Abweichung kleiner als der Detektionsschwellenwert (S) ist.

**Claims**

1. Anticipating module (6) for a real-time path control device of a motor vehicle, said module comprising a computing sub-module (65) for computing a steering command to offset the curvature of a bend in the lane of the vehicle, a variable-gain device (70) being linked to an output of the computing sub-module, **characterized in that** the variable-gain device is linked to a controller (73) able to adjust the gain value of the variable-gain device when the vehicle is oversteering on the bend in relation to the nominal configuration so as to decrease the lateral deviation (yl) between the centre of gravity of the vehicle and the centre of the lane (81) of the vehicle as a function of the result of the comparison of components of a vector ($\eta$) of current measurements of state variables of the device with one another and with a detection threshold (S), the output of the variable gain being the steering command to offset the curvature ($\gamma$ff) of the bend and the vehicle being deemed to be oversteering when the lateral deviation (yl) and the direction of the bend are oriented in the same direction in a reference frame (R) of the vehicle, and when the lateral deviation is greater than a detection threshold (S).

2. Module according to one of Claims 1, also including a second computing sub-module (77) linked to an output of the variable-gain device (70) and designed to compute a measurement vector ($\eta_{eq}$) pseudo-calculated using a model of the vehicle.

3. Module according to Claim 2, in which the model of the vehicle comprises a bicycle model.

4. Real-time path control device (5) of a vehicle designed to offset the curvature ($\gamma$ff) of a bend in a lane (80) of a vehicle (1) comprising an anticipating module (6) according to one of the preceding claims, and an observer (3) generating, in real time, an estimated straight-lane-follow state vector ($\xi$) of the vehicle such as to produce a steering command (Ust) to stabilize the path of the vehicle in relation to the straight lane, the observer being linked to the anticipating module.

5. Real-time path control method for a motor vehicle designed to offset the curvature ($\gamma$ff) of a bend in the lane (80) of the vehicle (1), **characterized in that** the gain of a variable-gain device (73) of an anticipating module (6) is adjusted when the vehicle is deemed to be oversteering on a bend in relation to a nominal configuration, in order to reduce the lateral deviation (yl) between the centre of gravity of the vehicle and the centre (81) of the lane of the vehicle, the vehicle being deemed to be oversteering when the lateral deviation (yl) and the direction of the bend are oriented in the same direction in a reference frame (R) of the vehicle, and when the lateral deviation is greater than a detection threshold (S).

6. Method according to Claim 5, in which the gain of a variable-gain device (73) is reset when the lateral deviation (yl) and the direction of the bend are oriented in different directions in the reference frame (R) of the vehicle and the lateral deviation is less than the detection threshold (S).

[Fig 1]

# ART ANTERIEUR

[Fig 2]

# ART ANTERIEUR

## Angle Volant (δ)

[Fig 3]

ART ANTERIEUR

Ecart Latéral (Yl)

[Fig 4]

ART ANTERIEUR

Angle Volant (δ)

EP 3 947 076 B1

[Fig 5]

# ART ANTERIEUR

Ecart Latéral (Yl)

[Fig 6]

[Fig 7]

[Fig 8]

[Fig 9]

[Fig 10]

[Fig 11]

Ecart Latéral (Yl)

**EP 3 947 076 B1**

**RÉFÉRENCES CITÉES DANS LA DESCRIPTION**

**Documents brevets cités dans la description**

- FR 3051756
- FR 3040049
- FR 2991276 A1